# EUROPÄISCHE PATENTSCHRIFT

(11) **EP 3 585 682 B1**
(45) Veröffentlichungstag und Bekanntmachung des Hinweises auf die Patenterteilung: **10.01.2024**
(21) Anmeldenummer: 18706679.0
(22) Anmeldetag: 13.02.2018
(51) Int. Cl.: B63G 8/08, H01M 8/0612, H01M 8/0438, H01M 8/0444, H01M 8/04664

(54) **REFORMERÜBERWACHUNG AN BORD EINES UNTERSEEBOOTS**
REFORMER MONITORING ON BOARD A SUBMARINE
SURVEILLANCE D'UN REFORMEUR À BORD D'UN SOUS-MARIN

(30) Priorität: 23.02.2017 DE 102017202911
(43) Veröffentlichungstag der Anmeldung: 01.01.2020
(73) Patentinhaber: thyssenkrupp Marine Systems GmbH, 24143 Kiel (DE); thyssenkrupp AG, 45143 Essen (DE)
(72) Erfinder: QUANTE, Armin, 24340 Eckernförde (DE); VOGLER, Malte, 24211 Lehmkuhlen (DE)
(74) Vertreter: thyssenkrupp Intellectual Property GmbH
(86) Internationale Anmeldenummer: PCT/EP2018/053469
(87) Internationale Veröffentlichungsnummer: WO 2018/153720

(56) Entgegenhaltungen:
- EP-A2- 2 151 377
- EP-A2- 2 525 146
- EP-A2- 2 586 698
- DE-A1-102017 202 911

## Beschreibung

Die Erfindung betrifft ein Unterseeboot mit einem Reformer und eine Vorrichtung beziehungsweise ein Verfahren zur Überwachung insbesondere auf austretende Gase.

Ein Unterseeboot stellt eine Umgebung dar, welche von üblichen Anwendung stark unterschiedlich ist. Insbesondere kann der Druck in einem Bereich von 600 hPa bis 1400 hPa variieren. In diesem Druckbereich muss zum einen die Anlage sicher funktionieren, zum anderen muss aber auch die Sicherheit des Unterseebootes und der Besatzung gewährleistet sein.

Bei der Verwendung eines Reformers an Bord eines Unterseebootes können eine ganze Reihe verschiedener Verbindungen an die Umgebungsluft abgegeben werden. Diese müssen sensorisch überwacht werden. Gassensoren detektieren technisch bedingt jedoch den Partialdruck, was im Regelfall bei vergleichsweise konstantem Umgebungsdruck unproblematisch ist. Durch die starken Druckschwankungen in einem Unterseeboot führt dieses jedoch zu einem Problem, weil die Messwerte durch den variablen Umgebungsdruck verfälscht werden. Um die Sicherheit zu gewährleisten muss daher üblicherweise von dem geringstmöglichen Druck ausgegangen werden, was zu einem häufigeren und unnötigen Abschalten der Anlage führt.

Aufgrund der starken Druckschwankungen kann der Reformer auch nicht einfach druckdicht gekapselt werden. Dieses wäre durch die große Druckdifferenz raum- und gewichtsintensiv.

Aus der EP 2 151 377 A2 ist ein Verfahren zum Spülen zumindest eines Teils einer Antriebsanlage eines Fahrzeugs bekannt.

Aus der EP 2 525 146 A2 ist ein Verfahren zur Verbrennung eines Brennstoff-Sauerstoff-Gemisches und Vorrichtung zur Durchführung dieses Verfahrens bekannt.

Aus der DE 10 2017 202 911 A1 ist ein Unterseeboot mit einem Reformer und wenigstens einem ersten Sensor am Gasauslass bekannt. Die Priorität der DE 10 2017 202 911 A1 ist in Anspruch genommen.

Aus der EP 2 586 698 A2 ist ein Unterseeboot mit einer Vorrichtung, welche ein Schadgas erzeugt und/oder verwendet, mit einem Mittel zur Schadgasumwandlung und/oder Schadgasadsorption bekannt.

Aufgabe der Erfindung ist es, einen für ein Unterseeboot geeigneten Reformer zu bauen, der eine sichere und zuverlässige Gaserfassung ermöglicht und dadurch nicht unnötig abgeschaltet werden muss.

Gelöst wird diese Aufgabe durch ein Unterseeboot mit den in Anspruch 1 angegebenen Merkmalen sowie durch ein Verfahren mit den in Anspruch 8 angegebenen Merkmalen. Vorteilhafte Weiterbildungen ergeben sich aus den Unteransprüchen, der nachfolgenden Beschreibung sowie den Zeichnungen.

Das erfindungsgemäße Unterseeboot weist einen Reformer auf, wobei der Reformer ein Reformergehäuse aufweist. Der Reformer weist wenigstens einen ersten Kühler zur Kühlung der Luft im Reformergehäuse auf, wobei der wenigstens eine erste Kühler im Inneren des Reformergehäuses angeordnet ist. Der Reformer weist wenigstens einen ersten Lüfter auf, wobei der wenigstens eine erste Lüfter zur Durchführung der Luft durch den wenigstens einen ersten Kühler ausgebildet ist. Der Reformer weist wenigstens einen ersten Sensor für ein erstes Gas auf, der wenigstens eine erste Sensor am Gasauslass des wenigstens einen ersten Lüfters oder des wenigstens einen ersten Kühlers angeordnet ist.

Der erste Lüfter kann in einer Variante vor dem ersten Kühler angeordnet sein. In diesem Fall ist der wenigstens eine Sensor vorzugsweise am Gasauslass des ersten Kühlers angeordnet. Der erste Lüfter kann in einer weiteren Variante hinter dem ersten Kühler angeordnet sein. In diesem Fall ist der wenigstens eine Sensor vorzugsweise am Gasauslass des ersten Lüfters angeordnet.

Hierdurch wird erreicht, dass auf eine eigene Gaszuführung zum Sensor verzichtet werden kann. Zum anderen sind die Umgebungsbedingungen Druck und Temperatur an dieser Stelle vergleichsweise kontrolliert, sodass die Zuverlässigkeit der Messergebnisse gesteigert ist.

Erfindungsgemäß weist der Reformer wenigstens einen zweiten Sensor für ein zweites Gas auf, wobei der wenigstens eine zweite Sensor am Gasauslass des wenigstens einen ersten Lüfters oder des wenigstens einen ersten Kühlers angeordnet ist. Besonders bevorzugt ist der zweite Sensor benachbart zum ersten Sensor angeordnet.

In einer weiteren Ausführungsform der Erfindung weist der Reformer wenigstens einen dritten Sensor für ein drittes Gas auf, wobei der wenigstens eine dritte Sensor am Gasauslass des wenigstens einen ersten Lüfters oder des wenigstens einen ersten Kühlers angeordnet ist. Besonders bevorzugt ist der dritte Sensor benachbart zum ersten Sensor angeordnet.

In einer weiteren Ausführungsform der Erfindung weist der Reformer wenigstens einen vierten Sensor für ein viertes Gas auf, wobei der wenigstens eine vierte Sensor am Gasauslass des wenigstens einen ersten Lüfters oder des wenigstens einen ersten Kühlers angeordnet ist. Besonders bevorzugt ist der vierte Sensor benachbart zum ersten Sensor angeordnet.

Es können auch weitere Sensoren verwendet werden. Vier Sensoren haben sich jedoch als Optimum herausgestellt.

Erfindungsgemäß weist das Unterseeboot eine Auswerteeinheit auf, wobei die Auswerteeinheit Informationen über die Empfindlichkeit des ersten Sensors für das zweite Gas und Informationen über die Empfindlichkeit des zweiten Sensors für das erste Gas aufweist. Da leider viele Sensoren eine Empfindlichkeit für mehr als einen Stoff aufweisen, kann es notwendig sein, diese Kreuzempfindlichkeiten zu kennen und bei der Auswertung zu berücksichtigen. Es kann dazu vorgesehen sein, dass die Kreuzempfindlichkeiten bei der Auswertung mittels Kalibrierwerten oder Kalibrierfunktionen berücksichtigt werden, wobei diese Kalibrierwerte oder Kalibrierfunktionen vor der Messung in Abhängigkeit des Umgebungsdrucks bestimmt werden. Es kann darüber hinaus auch vorgesehen sein, dass auch die Temperatur des Gases bei den Kalibrierwerten oder Kalibrierfunktionen berücksichtigt wird.

In einer weiteren Ausführungsform der Erfindung weist der wenigstens eine erste Sensor einen ersten ersten Teilsensor und einen zweiten ersten Teilsensor auf, wobei der erste erste Teilsensor zur Detektion des ersten Gases ausgebildet ist und wobei der zweite erste Teilsensor zur Erfassung des Druckes ausgebildet ist. Hierdurch ist es möglich, nicht nur den Partialdruck, sondern auch den Volumenanteil eines Gases zu bestimmen.

In einer weiteren Ausführungsform der Erfindung weist der wenigstens eine zweite Sensor einen ersten zweiten Teilsensor und einen zweiten zweiten Teilsensor auf, wobei der erste zweite Teilsensor zur Detektion des zweiten Gases ausgebildet ist und wobei der zweite zweite Teilsensor zur Erfassung des Druckes ausgebildet ist. Hierdurch ist es möglich, nicht nur den Partialdruck, sondern auch den Volumenanteil eines Gases zu bestimmen.

In einer weiteren Ausführungsform der Erfindung weist die Auswerteeinheit zumindest einen Sensor zur Zustandsüberwachung des Unterseeboots auf. Dieser mindestens eine Sensor misst mindestens einen Zustand aus der Gruppe der Werte Umgebungsdruck, Umgebungstemperatur, Gastemperatur, Betriebszustand des Reformers, Betriebszustand der Brennstoffzelle, Tauchtiefe, Gasbestandteile der Umgebung. Unter "Umgebung" wird in diesem Zusammenhang das Innere des Druckkörpers des Unterseeboots verstanden, bevorzugt die unmittelbare Umgebung in der Nähe des Reformers.

In einer weiteren alternativen Ausführungsform wird der erste zweite Teilsensor verwendet, um die Daten des zweiten Sensors auszuwerten.

In einer weiteren Ausführungsform der Erfindung weist der wenigstens eine erste Sensor einen Differentialverstärker auf, wobei ein erstes Messsignal des ersten Teilsensors und ein zweites Messsignals des zweiten Teilsensors als Eingangssignal des Differentialverstärkers verwendet werden.

In einer weiteren Ausführungsform der Erfindung ist das Reformergehäuse nicht druckfest gegenüber dem Bootsinneren ausgebildet. Hierdurch ist es möglich, insbesondere Gewicht und Platz zu sparen. Ebenso wird die Wartung erleichtert. In einer Fortbildung dieser Ausführungsform ist das Reformergehäuse auch gasdurchlässig gegenüber dem Bootsinneren.

In einer weiteren Ausführungsform der Erfindung ist der erste Sensor zur Erfassung eines Gases ausgebildet, wobei das Gas ausgewählt ist aus der Gruppe umfassend Wasserstoff, Sauerstoff, Kohlenmonoxid, Kohlendioxid, Alkane, insbesondere Methan, Ethan, Propan, n-Buthan und 2-Methylpropan, und Alkanole, insbesondere Methanol, Ethanol, 1-Propanol und 2-Propanol. Besonders bevorzugt ist das Gas ausgewählt aus der Gruppe umfassend Wasserstoff, Sauerstoff, Kohlenmonoxid, Kohlendioxid und Methanol.

In einer weiteren Ausführungsform der Erfindung weist der Reformer eine Oxidationsvorrichtung zur mikrowellenassistierten katalytischen Oxidation auf.

In einer weiteren Ausführungsform der Erfindung ist der Reformer in einem Druckbereich von 600 hPa bis 1.400 hPa betreibbar.

In einem weiteren Aspekt betrifft die Erfindung ein Verfahren zur Überwachung der Luft in einem Reformer auf einem Unterseeboot, wobei der Reformer ein Reformergehäuse aufweist, wobei das Verfahren die folgenden Schritte umfasst:
a) Erfassen eines ersten Partialdrucks eines ersten Gases,
b) Erfassen eines zweiten Partialdrucks eines zweiten Gases,
c) Erfassen des Luftdrucks,
d) Ermitteln eines ersten Volumenanteils des ersten Gases an der Luft,
e) Ermitteln eines zweiten Volumenanteils des zweiten Gases an der Luft,
f) Vergleich des ersten Volumenanteils des ersten Gases an der Luft mit einem ersten Grenzwert,
g) Vergleich des zweiten Volumenanteils des zweiten Gases an der Luft mit einem ersten Grenzwert.

In einer weiteren Ausführungsform der Erfindung wird die Luft zunächst durch einen Kühler und anschließend über eine Vorrichtung zu Erfassung der Partialdrucke der Gase geleitet.

Erfindungsgemäß wird in Schritt d) und in Schritt e) jeweils die Kreuzempfindlichkeit berücksichtigt. Die Kreuzempfindlichkeit gibt an, wie stark das zweite Gas den ersten Sensor beziehungsweise das erste Gas den zweiten Sensor beeinflusst. Mit dieser Kenntnis kann aus den beiden Werten zusammen jeweils der Volumenanteil des ersten Gases und des zweiten Gases exakt ermittelt werden. Bevorzugt ist die Kreuzempfindlichkeit druckabhängig bekannt und wird druckabhängig berücksichtigt. Bei einer Mehrzahl an Sensoren, beispielsweise vier Sensoren muss die Kreuzempfindlichkeit nicht unbedingt für jeden Sensor und jedes Gas bekannt sein. Es reicht hier regelmäßig die Kenntnis aus, welches Gas welchen Sensor beeinflussen kann und welche Gase gegebenenfalls eine vernachlässigbare Beeinflussung bewirken. Beispielsweise kann die Kreuzempfindlichkeit mit Hilfe der Matrixberechnung erfolgen.

In einer Weiterbildung der Ausführungsform wird bei der Bestimmung der Partialdrücke der von den Sensoren gemessenen Gase nicht nur die druckabhängige Kreuzempfindlichkeit der Gase berücksichtigt, sondern auch die bestimmten Volumenanteile der Gase. Es geht damit in die Korrektur des Messwertes jedes Sensors nicht nur die Druckabhängigkeit, sondern auch der Volumenanteil des über die Kreuzempfindlichkeit beeinflussenden Gases ein. Es kann dabei vorgesehen sein, dass bei mehreren Kreuzempfindlichkeiten ein mehrstufiges mathematisches Näherungsverfahren genutzt wird, bei dem stufenweise die Messwerte der Sensoren korrigiert und somit angenähert werden.

In einer weiteren Ausführungsform der Erfindung wird in Schritt d) und in Schritt e) die Kreuzempfindlichkeit des ersten Sensors und des zweiten Sensors gegenüber einem weiteren Gas berücksichtigt, das von keinem der Sensoren direkt gemessen wird. Die Kreuzempfindlichkeit kann nicht nur gegenüber den zu bestimmenden kritischen Gasen bestehen, sondern auch gegenüber weiteren Gasen. Dabei kann der vom jeweiligen Sensor gemessene Partialdruck durch das dritte Gas verfälscht werden, wenn sich die äußeren Betriebsbedingungen, wie beispielsweise der Betriebsdruck oder die Temperatur im Unterseeboot ändern. Hierzu können entsprechende Sensoren vorgesehen sein. Hierzu werden bevorzugt Kalibrierkurven des ersten und zweiten Sensors aufgenommen.

Es kann dabei vorgesehen sein, dass in einem Schritt h) nach Schritt g) über die Höhe Berücksichtigung der Kreuzempfindlichkeit des ersten und des zweiten Sensors sowie der äußeren Betriebsbedingungen das Volumen des weiteren Gases bestimmt wird. Es kann vorgesehen sein, dass diese Schritte nur dann ausgeführt werden, wenn die Betriebsbedingungen des Reformers derart sind, dass ein konstanter Volumenanteil des ersten und zweiten Gases vorliegt. Diese Betriebsbedingungen liegen beispielsweise vor, wenn der Reformer betriebsbereit ist, aber der Reformierungsprozess nicht durchgeführt wird, so dass keine veränderlichen Volumenanteile bei den Produktgasen gemessen werden. Es kann darüber hinaus vorgesehen sein, dass in einem Schritt i) dieses Volumen mit einem Grenzwert verglichen wird.

In einer weiteren Ausführungsform der Erfindung sind das erste Gas und das zweite Gas ausgewählt aus der Gruppe umfassend Wasserstoff, Sauerstoff, Kohlenmonoxid, Kohlendioxid, Alkane, insbesondere Methan, Ethan, Propan, n-Buthan und 2-Methylpropan, und Alkanole, insbesondere Methanol, Ethanol, 1-Propanol und 2-Propanol. Besonders bevorzugt sind das erste Gas und das zweite Gas ausgewählt aus der Gruppe umfassend Wasserstoff, Sauerstoff, Kohlenmonoxid, Kohlendioxid und Methanol.

## Patentansprüche

1. Unterseeboot mit einem Reformer, wobei der Reformer ein Reformergehäuse aufweist, wobei der Reformer wenigstens einen ersten Kühler zur Kühlung der Luft im Reformergehäuse aufweist, wobei der wenigstens eine erste Kühler im Inneren des Reformergehäuses angeordnet ist, wobei der Reformer wenigstens einen ersten Lüfter aufweist, wobei der wenigstens eine erste Lüfter zur Durchführung der Luft durch den wenigstens einen ersten Kühler ausgebildet ist, wobei der Reformer wenigstens einen ersten Sensor für ein erstes Gas aufweist, **dadurch gekennzeichnet, dass** der wenigstens eine erste Sensor am Gasauslass des wenigstens einen ersten Lüfters oder des wenigstens einen ersten Kühlers angeordnet ist, wobei der Reformer wenigstens einen zweiten Sensor für ein zweites Gas aufweist, wobei der wenigstens eine zweite Sensor am Gasauslass des wenigstens einen ersten Lüfters oder des wenigstens einen ersten Kühlers angeordnet ist, wobei das Unterseeboot eine Auswerteeinheit aufweist, wobei die Auswerteeinheit Informationen über die Empfindlichkeit des ersten Sensors für das zweite Gas und Informationen über die Empfindlichkeit des zweiten Sensors für das erste Gas aufweist.

2. Unterseeboot nach Anspruch 1, **dadurch gekennzeichnet, dass** der wenigstens eine erste Sensor einen ersten Teilsensor und einen zweiten Teilsensor aufweist, wobei der erste Teilsensor zur Detektion des ersten Gases ausgebildet ist und wobei der zweite Teilsensor zur Erfassung des Druckes ausgebildet ist.

3. Unterseeboot nach Anspruch 2, **dadurch gekennzeichnet, dass** der wenigstens eine erste Sensor einen Differentialverstärker aufweist, wobei ein erstes Messsignal des ersten Teilsensors und ein zweites Messsignals des zweiten Teilsensors als Eingangssignal des Differentialverstärkers verwendet werden.

4. Unterseeboot nach einem der vorstehenden Ansprüche, **dadurch gekennzeichnet, dass** das Reformergehäuse nicht druckfest gegenüber dem Bootsinneren ausgebildet ist.

5. Unterseeboot nach einem der vorstehenden Ansprüche, **dadurch gekennzeichnet, dass** der erste Sensor zur Erfassung eines Gases ausgebildet ist, wobei das Gas ausgewählt ist aus der Gruppe umfassend Wasserstoff, Sauerstoff, Kohlenmonoxid, Kohlendioxid, Alkane, insbesondere Methan, Ethan, Propan, n-Buthan und 2-Methylpropan, und Alkanole, insbesondere Methanol, Ethanol, 1-Propanol und 2-Propanol.

6. Unterseeboot nach einem der vorstehenden Ansprüche, **dadurch gekennzeichnet, dass** der Reformer eine Oxidationsvorrichtung zur mikrowellenassistierten katalytischen Oxidation aufweist.

7. Unterseeboot nach einem der vorstehenden Ansprüche, **dadurch gekennzeichnet, dass** der Reformer in einem Druckbereich von 600 hPa bis 1.400 hPa betreibbar ist.

8. Verfahren zur Überwachung der Luft in einem Reformer auf einem Unterseeboot, wobei der Reformer ein Reformergehäuse aufweist, wobei das Verfahren die folgenden Schritte umfasst:
a) Erfassen eines ersten Partialdrucks eines ersten Gases,
b) Erfassen eines zweiten Partialdrucks eines zweiten Gases,
c) Erfassen des Luftdrucks,
d) Ermitteln eines ersten Volumenanteils des ersten Gases an der Luft,
e) Ermitteln eines zweiten Volumenanteils des zweiten Gases an der Luft,
f) Vergleich des ersten Volumenanteils des ersten Gases an der Luft mit einem ersten Grenzwert,
g) Vergleich des zweiten Volumenanteils des zweiten Gases an der Luft mit einem ersten Grenzwert,
**dadurch gekennzeichnet, dass** in Schritt d) und in Schritt e) jeweils die Kreuzempfindlichkeit berücksichtigt wird.

9. Verfahren nach Anspruch 8, **dadurch gekennzeichnet, dass** die Luft zunächst durch einen Kühler und anschließend über eine Vorrichtung zu Erfassung der Partialdrucke der Gase geleitet wird.

10. Verfahren nach einem der Ansprüche 8 bis 9, **dadurch gekennzeichnet, dass** das erste Gas und das zweite Gas ausgewählt sind aus der Gruppe umfassend Wasserstoff, Sauerstoff, Kohlenmonoxid, Kohlendioxid, Alkane, insbesondere Methan, Ethan, Propan, n-Buthan und 2-Methylpropan, und Alkanole, insbesondere Methanol, Ethanol, 1-Propanol und 2-Propanol.

## Claims

1. Submarine with a reformer, the reformer having a reformer housing, the reformer having at least one first cooler for cooling the air in the reformer housing, the at least one first cooler being arranged in the interior of the reformer housing, the reformer having at least one first fan, the at least one first fan being designed to pass the air through the at least one first cooler, the reformer having at least one first sensor for a first gas, **characterized in that** the at least one first sensor is arranged at the gas outlet of the at least one first fan or of the at least one first cooler, the reformer having at least one second sensor for a second gas, the at least one second sensor being arranged at the gas outlet of the at least one first fan or of the at least one first cooler, **in that** the at least one first sensor is arranged at the gas outlet of the at least one first fan or of the at least one first cooler, the reformer having at least one second sensor for a second gas, the at least one second sensor being arranged at the gas outlet of the at least one first fan or of the at least one first cooler, the submarine having an evaluation unit, the evaluation unit having information about the sensitivity of the first sensor for the second gas and information about the sensitivity of the second sensor for the first gas.

2. Submarine according to claim 1, **characterized in that** the at least one first sensor has a first partial sensor and a second partial sensor, wherein the first partial sensor is designed to detect the first gas and wherein the second partial sensor is designed to detect the pressure.

3. Submarine according to claim 2, **characterized in that** the at least one first sensor has a differential amplifier, wherein a first measurement signal of the first partial sensor and a second measurement signal of the second partial sensor are used as input signal of the differential amplifier.

4. Submarine according to one of the preceding claims, **characterized in that** the reformer housing is not pressure-resistant with respect to the interior of the boat.

5. Submarine according to one of the preceding claims, **characterized in that** the first sensor is designed to detect a gas, the gas being selected from the group comprising hydrogen, oxygen, carbon monoxide, carbon dioxide, alkanes, in particular methane, ethane, propane, n-butane and 2-methylpropane, and alkanols, in particular methanol, ethanol, 1-propanol and 2-propanol.

6. Submarine according to one of the preceding claims, **characterized in that** the reformer has an oxidation device for microwave-assisted catalytic oxidation.

7. submarine according to one of the preceding claims, **characterized in that** the reformer can be operated in a pressure range of 600 hPa to 1,400 hPa.

8. Method for monitoring the air in a reformer on a submarine, the reformer having a reformer housing, the method comprising the following steps:
(a) detecting a first partial pressure of a first gas,
b) detecting a second partial pressure of a second gas,
c) detecting the air pressure,
d) determining a first volume fraction of the first gas in the air,
e) determining a second volume fraction of the second gas in the air,
f) comparing the first volume fraction of the first gas in the air with a first limit value,
g) comparing the second volume fraction of the second gas in the air with a first limit value,
**characterized in that** in step d) and in step e) the cross-sensitivity is taken into account in each case.

9. Method according to claim 8, **characterized in that** the air is first passed through a cooler and then through a device for detecting the partial pressures of the gases.

10. Method according to one of claims 8 to 9, **characterized in that** the first gas and the second gas are selected from the group comprising hydrogen, oxygen, carbon monoxide, carbon dioxide, alkanes, in particular methane, ethane, propane, n-butane and 2-methylpropane, and alkanols, in particular methanol, ethanol, 1-propanol and 2-propanol.

## Revendications

1. Sous-marin avec un reformeur, le reformeur présentant un boîtier de reformeur, le reformeur présentant au moins un premier refroidisseur pour refroidir l'air dans le boîtier de reformeur, le au moins un premier refroidisseur étant disposé à l'intérieur du boîtier de reformeur, le reformeur présentant au moins un premier ventilateur, le au moins un premier ventilateur étant conçu pour faire passer l'air à travers le au moins un premier refroidisseur, le reformeur présentant au moins un premier capteur pour un premier gaz, **caractérisé en ce que** le au moins un premier capteur est conçu pour détecter un deuxième gaz, **en ce que** le au moins un premier capteur est disposé à la sortie de gaz du au moins un premier ventilateur ou du au moins un premier refroidisseur, le reformeur présentant au moins un deuxième capteur pour un deuxième gaz, le au moins un deuxième capteur étant disposé à la sortie de gaz du au moins un premier ventilateur ou du au moins un premier refroidisseur, le sous-marin présentant une unité d'évaluation, l'unité d'évaluation présentant des informations sur la sensibilité du premier capteur pour le deuxième gaz et des informations sur la sensibilité du deuxième capteur pour le premier gaz.

2. Sous-marin selon la revendication 1, **caractérisé en ce que** le au moins un premier capteur présente un premier capteur partiel et un deuxième capteur partiel, le premier capteur partiel étant conçu pour détecter le premier gaz et le deuxième capteur partiel étant conçu pour détecter la pression.

3. Sous-marin selon la revendication 2, **caractérisé en ce que** le au moins un premier capteur comprend un amplificateur différentiel, un premier signal de mesure du premier capteur partiel et un deuxième signal de mesure du deuxième capteur partiel étant utilisés comme signal d'entrée de l'amplificateur différentiel.

4. Sous-marin selon l'une des revendications précédentes, **caractérisé en ce que** le boîtier du reformeur n'est pas résistant à la pression par rapport à l'intérieur du bateau.

5. Sous-marin selon l'une des revendications précédentes, **caractérisé en ce que** le premier capteur est configuré pour détecter un gaz, ledit gaz étant choisi dans le groupe comprenant l'hydrogène, l'oxygène, le monoxyde de carbone, le dioxyde de carbone, les alcanes, notamment le méthane, l'éthane, le propane, le n-butane et le 2-méthylpropane, et les alcanols, notamment le méthanol, l'éthanol, le 1-propanol et le 2-propanol.

6. Sous-marin selon l'une quelconque des revendications précédentes, **caractérisé en ce que** le reformeur comprend un dispositif d'oxydation pour l'oxydation catalytique assistée par micro-ondes.

7. Sous-marin selon l'une des revendications précédentes, **caractérisé en ce que** le reformeur peut fonctionner dans une plage de pressions de 600 hPa à 1 400 hPa.

8. Procédé de surveillance de l'air dans un reformeur sur un sous-marin, le reformeur comprenant un boîtier de reformeur, le procédé comprenant les étapes suivantes :
(a) détection d'une première pression partielle d'un premier gaz w,
b) détection d'une deuxième pression partielle d'un deuxième gaz ,
c) détection de la pression de l'air,d) Détermination d'une première fraction volumique du premier gaz dans l'air,
e) détermination d'une deuxième fraction volumique du deuxième gaz dans l'air,
f) comparaison de la première fraction volumique du premier gaz dans l'air avec une première valeur limite,
g) comparaison de la deuxième fraction volumique du deuxième gaz dans l'air avec une première valeur limite,
**caractérisé en ce que** la sensibilité croisée est prise en compte à l'étape d) et à l'étape e).

9. Procédé selon la revendication 8, **caractérisé en ce que** l'air est d'abord envoyé à travers un refroidisseur, puis à travers un dispositif de détection des pressions partielles des gaz.

10. Procédé selon l'une des revendications 8 à 9, **caractérisé en ce que** le premier gaz et le deuxième gaz sont choisis dans le groupe comprenant l'hydrogène, l'oxygène, le monoxyde de carbone, le dioxyde de carbone, les alcanes, notamment le méthane, l'éthane, le propane, le n-butane et le 2-méthylpropane, et les alcanols, notamment le méthanol, l'éthanol, le 1-propanol et le 2-propanol.
